# FASCICULE DE BREVET EUROPEEN

(11) **EP 3 427 981 B1**
(45) Date de publication et mention de la délivrance du brevet: **09.09.2020**
(21) Numéro de dépôt: 18181836.0
(22) Date de dépôt: 05.07.2018
(51) Int. Cl.: B60G 21/05

(54) **TRAIN ARRIÈRE DE VÉHICULE AUTOMOBILE COMPRENANT DES MOYENS D'ABSORPTION DE L'ÉNERGIE D'UN CHOC ARRIÈRE**
HINTERACHSE EINES KRAFTFAHRZEUGS, DIE ENERGIEABSORPTIONSMITTEL EINES RÜCKWÄRTIGEN AUFPRALLS UMFASST
AUTOMOTIVE VEHICLE REAR TRAIN COMPRISING MEANS FOR ABSORBING THE ENERGY OF A REAR IMPACT

(30) Priorité: 13.07.2017 FR 1756666
(43) Date de publication de la demande: 16.01.2019
(73) Titulaire: RENAULT s.a.s., 92100 Boulogne-Billancourt (FR)
(72) Inventeur: SAUDEMONT, Yoann, 28210 LES PINTHIERES (FR); ENJOLRAS, Gilles, 78990 ELANCOURT (FR)

(56) Documents cités:
- EP-A1- 2 476 565
- WO-A1-2015/015082
- JP-A- H05 105 117

## Description

La présente invention concerne le domaine des véhicules automobiles, et plus particulièrement, les trains arrière de véhicules automobiles.

L'invention concerne les trains arrière de type à essieux souples comprenant un ressort de suspension reposant sur une coupelle de support solidaire dudit essieu et s'étendant vers l'arrière du véhicule. La coupelle de support ainsi que le ressort sont exposés au mobilier urbain, c'est-à-dire qu'ils ne sont pas protégés et sont susceptible d'entrer en contact avec tout obstacle se trouvant dans l'environnement extérieur et peuvent ainsi se détériorer en cas de choc survenant lors d'une manœuvre en marche arrière du véhicule.

En effet, lors d'une manœuvre en marche arrière, le châssis du véhicule automobile peut rentrer en contact avec un obstacle pouvant le détériorer. Un châssis est généralement dimensionné de manière à pouvoir supporter un niveau d'énergie déterminé lors d'un choc arrière. Afin de supporter un niveau de charge plus élevé, il est nécessaire de surdimensionner le châssis, ce qui augmente fortement le coût de fabrication du véhicule et son poids.

WO2015/015082 divulgue un exemple de pièce protégeant le ressort d'un train de roulement de toute collision avec un obstacle extérieur.

En cas d'un choc arrière transmettant des énergies élevées, notamment risquant l'endommagement de l'essieu et du châssis du véhicule, il est nécessaire d'alerter le conducteur du véhicule afin qu'il puisse faire réparer son véhicule au plus vite.

L'invention a pour but de remédier les inconvénients ci-dessus en proposant un système permettant d'alerter le conducteur en cas de choc.

De plus l'invention vise à éviter de sur-dimensionner le châssis

L'invention a pour objet un train arrière de véhicule automobile comprenant un essieu arrière, au moins un ressort de suspension et une coupelle de support dudit ressort solidaire de l'essieu.

Le train arrière comprend un organe d'absorption de l'énergie d'un choc arrière avec un obstacle extérieur, l'organe d'absorption de choc étant fixé à la coupelle de support dudit ressort et configuré pour se déformer de manière à entrer en contact avec le ressort lors d'un choc avec un obstacle extérieur à l'arrière du véhicule. L'organe d'absorption est réalisé en matériau ductile.

Le contact entre l'organe d'absorption avec le ressort engendre une nuisance sonore alertant le conducteur sur la déformation de l'essieu liée à un choc à l'arrière du véhicule.

La coupelle de support du ressort s'étend par exemple vers l'arrière du véhicule.

Le ressort de suspension ainsi que la coupelle de support d'un tel essieu ne sont pas protégés et sont exposés au mobilier urbain, c'est-à-dire à tout obstacle se trouvant dans l'environnement extérieur susceptible de détériorer le châssis, et notamment l'essieu en cas de choc arrière, par exemple lors d'une manœuvre en marche arrière du véhicule ou lors de la collision d'un objet ou un autre véhicule automobile avec l'arrière du véhicule, par exemple lorsque le véhicule est arrêté ou en marche avant.

Avantageusement, l'organe d'absorption de choc comprend une première partie, par exemple de section en forme de U, fixée à la coupelle de support du ressort et s'étendant vers l'arrière du véhicule, et une deuxième partie fixée à l'extrémité arrière de la première partie et s'étendant à partir de ladite extrémité arrière vers le haut du véhicule. Ladite deuxième partie est étant configurée pour pivoter angulairement par rapport à la première partie autour de la jonction entre lesdites parties lors d'un choc avec un obstacle extérieur à l'arrière du véhicule

La deuxième partie peut comprendre un corps, par exemple de section en forme de U, et au moins une patte en saillie dudit corps vers le ressort.

Ainsi, lors d'un effort en cas de choc arrière l'organe d'absorption de choc se déforme de manière à faire pivoter angulairement la deuxième partie par rapport à la première partie autour de la jonction entre lesdites parties entrainant la pénétration de la patte dans le volume de fonctionnement du ressort. Le contact entre l'organe d'absorption, et notamment la deuxième partie via la patte, avec le ressort permet de générer de manière efficace une nuisance sonore liée au contact entre le ressort en mouvement et les pattes de l'organe d'absorption de choc et ainsi alerter le conducteur du véhicule dès que l'essieu se déforme.

Par exemple, la patte est reliée orthogonalement au corps de la deuxième partie.

Selon un autre mode de réalisation, la deuxième partie comprend deux pattes parallèles entre elles en saillie dudit corps vers le ressort.

Les deux parties sont, par exemple, fixées entre elles par soudage.

L'organe d'absorption de choc est fixé à la coupelle de support, par exemple par des moyens de visseries permettant d'être interchangeable et ainsi de limiter les frais de réparation.

L'organe d'absorption de choc est réalisé en matériau fortement ductile, tel que par exemple, de l'acier, de l'aluminium avec un allongement à la rupture élevé ou tout autre matériau permettant d'obtenir de fortes déformations sans risque de rupture notamment pour des raisons de sécurité. L'organe d'absorption de choc est par exemple réalisé en acier HE450M.

Avantageusement, l'organe d'absorption de choc est démontable.

Selon un second aspect, l'invention concerne un véhicule automobile comprenant un train arrière tel que décrit précédemment.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue schématique une partie d'un train arrière d'un véhicule automobile selon l'invention; et
- la figure 2 représente la partie de train arrière selon la figure 1, après un choc avec un obstacle extérieur.

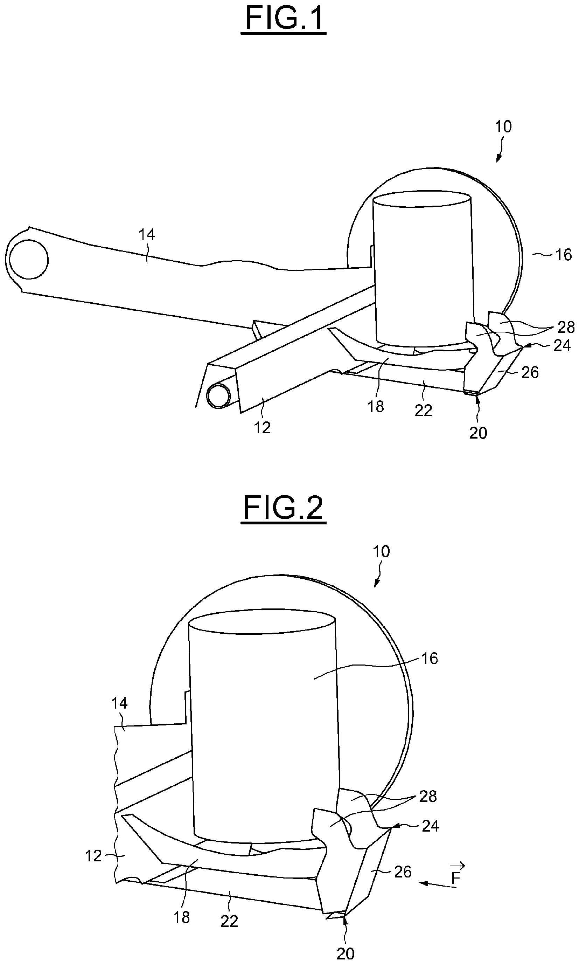

Telle que représentée sur la figure 1, une partie de train arrière 10 d'un véhicule automobile comprend un essieu arrière 12 reliant deux roues (non représentées), deux longerons latéraux 14 dont seul un longeron est représenté sur la figure 1.

Le train arrière comprend également un ressort de suspension 16 reposant sur une coupelle de support 18 solidaire de l'essieu 12 et s'étendant vers l'arrière du véhicule.

Le ressort de suspension 16 ainsi que la coupelle de support 18 d'un tel essieu ne sont pas protégés et sont exposés au mobilier urbain, c'est-à-dire à tout obstacle se trouvant dans l'environnement susceptible de détériorer le châssis, et notamment l'essieu en cas de choc arrière, par exemple lors d'une manœuvre en marche arrière du véhicule ou lors de la collision d'un objet avec l'arrière du véhicule.

Le train arrière comprend un organe 20 d'absorption de l'énergie d'un choc arrière avec un obstacle extérieur.

L'organe d'absorption de choc 20 se présente sous la forme d'une pièce mécanique déformable et ductile, c'est-à-dire qu'elle peut être tirée, étirée sans se rompre.

L'organe d'absorption de choc 20 est réalisé à partir de tôles métalliques embouties et usinées pour enlever de la matière afin de lui permettre d'être ductile, c'est-à-dire de se déformer sans se rompre lors d'un choc arrière à la coupelle de support 18.

L'organe d'absorption de choc 20 comprend une première partie 22, par exemple de section en forme de U, fixée à la coupelle de support 18 du ressort 16 et s'étendant vers l'arrière du véhicule, et une deuxième partie 24 fixée à l'extrémité arrière de la première partie et s'étendant à partir de ladite extrémité arrière vers le haut du véhicule.

La deuxième partie 24 comprend un corps 26 de section en forme de U et deux pattes 28 ou parties en saillie à partir depuis une extrémité supérieure 24a du corps 26, opposée à l'extrémité inférieure 24b fixée à la première partie 22. Les deux pattes 28 sont parallèles entre elles, à faces planes et s'étendent vers le volume de fonctionnement du ressort 16. En variante, on pourrait prévoir qu'une seule patte en saillie vers le ressort.

Les deux pattes 28 sont reliées orthogonalement au corps 26 de la deuxième partie 24. Les deux parties 22, 24 sont par exemple fixées par soudage.

L'organe d'absorption de choc 20 est fixé à la coupelle de support 18, par exemple par des moyens de visseries permettant d'être interchangeable et ainsi de limiter les frais de réparation.

Lors d'un effort F en cas de choc arrière illustré à la figure 2, l'organe d'absorption de choc 20 se déforme de manière à faire pivoter angulairement la deuxième partie 24 par rapport à la première partie 22 autour de la jonction entre lesdites parties 22, 24 de manière à ce que les pattes 28 pénètrent dans le volume de fonctionnement du ressort 16. Cette intrusion permet de générer de manière efficace une nuisance sonore liée au contact entre le ressort en mouvement et les pattes 28 de l'organe d'absorption de choc 20 et ainsi alerter le conducteur du véhicule dès que l'essieu se déforme.

Dans tous les modes de réalisation, l'organe d'absorption de choc 20 est réalisé en matériau fortement ductile, tel que par exemple, de l'acier, de l'aluminium avec un allongement à la rupture élevé ou tout autre matériau permettant d'obtenir de fortes déformations sans risque de rupture notamment pour des raisons de sécurité. L'organe d'absorption de choc 20 est par exemple réalisé en acier HE450M.

Ainsi, grâce à l'invention, l'organe d'absorption de choc 20 intervient comme une pièce fusible lorsque l'énergie d'un choc arrière est transmise à la coupelle de support du ressort d'un essieu arrière d'un véhicule automobile. Sa déformation générant un contact avec le ressort permet de générer une nuisance sonore alertant le conducteur du véhicule qu'un choc endommageant s'est produit à l'arrière du véhicule.

## Revendications

1. Train arrière de véhicule automobile comprenant un essieu arrière (12), au moins un ressort de suspension (16) et une coupelle de support (18) dudit ressort solidaire de l'essieu, **caractérisé en ce qu'**il comprend un organe (20) d'absorption de l'énergie d'un choc avec un obstacle extérieur à l'arrière du véhicule fixé à la coupelle de support (18) dudit ressort et configuré pour se déformer de manière à entrer en contact avec le ressort (16) lors d'un choc avec un obstacle extérieur à l'arrière du véhicule, l'organe d'absorption de choc (20) étant réalisé en matériau ductile.

2. Train arrière selon la revendication 1, dans lequel l'organe d'absorption de choc (20) comprend une première partie (22) fixée à la coupelle de support (18) du ressort (16) et s'étendant vers l'arrière du véhicule, et une deuxième partie (24) fixée à l'extrémité arrière de la première partie (22) et s'étendant à partir de ladite extrémité arrière vers le haut du véhicule, ladite deuxième partie (24) étant configurée pour pivoter angulairement par rapport à la première partie (22) autour de la jonction entre lesdites parties (22, 24) lors d'un choc avec un obstacle extérieur à l'arrière du véhicule.

3. Train arrière selon la revendication 2, dans lequel la deuxième partie (24) comprend un corps (26) et au moins une patte (28) en saillie dudit corps (26) vers le ressort (16).

4. Train arrière selon la revendication 2 ou 3, dans lequel la patte est reliée orthogonalement au corps (26) de la deuxième partie (24).

5. Train arrière selon la revendication 4, dans lequel la deuxième partie (24) comprend deux pattes (28) parallèles entre elles en saillie dudit corps (26) vers le ressort (16).

6. Train arrière selon l'une quelconque des revendications 1 à 5, dans lequel les deux parties (22, 24) sont par exemple fixées par soudage.

7. Train arrière selon l'une quelconque des revendications précédentes, dans lequel l'organe d'absorption de choc (20) est démontable.

8. Véhicule automobile comprenant un train arrière (10) selon l'une quelconque des revendications précédentes.

## Patentansprüche

1. Hinterachsaggregat eines Kraftfahrzeugs, welches eine Hinterachse (12), wenigstens eine Aufhängungsfeder (16) und einen mit der Achse fest verbundenen Stützteller (18) dieser Feder umfasst, **dadurch gekennzeichnet, dass** es ein Organ (20) zur Absorption der Energie eines Zusammenstoßes mit einem äußeren Hindernis hinten am Fahrzeug umfasst, das am Stützteller (18) der Feder befestigt ist und dafür ausgelegt ist, sich bei einem Zusammenstoß mit einem äußeren Hindernis hinten am Fahrzeug so zu verformen, dass es mit der Feder (16) in Kontakt kommt, wobei das Organ zur Stoßabsorption (20) aus duktilem Material hergestellt ist.

2. Hinterachsaggregat nach Anspruch 1, wobei das Organ zur Stoßabsorption (20) einen ersten Teil (22), der am Stützteller (18) der Feder (16) befestigt ist und sich zur Hinterseite des Fahrzeugs hin erstreckt, und einen zweiten Teil (24), der am hinteren Ende des ersten Teils (22) befestigt ist und sich von diesem hinteren Ende aus zur Oberseite des Fahrzeugs hin erstreckt, umfasst, wobei der zweite Teil (24) dafür ausgelegt ist, bei einem Zusammenstoß mit einem äußeren Hindernis hinten am Fahrzeug winklig in Bezug auf den ersten Teil (22) um die Verbindungsstelle zwischen den Teilen (22, 24) zu schwenken.

3. Hinterachsaggregat nach Anspruch 2, wobei der zweite Teil (24) einen Körper (26) und wenigstens eine Lasche (28), die vom Körper (26) aus zur Feder (16) hin vorsteht, umfasst.

4. Hinterachsaggregat nach Anspruch 2 oder 3, wobei die Lasche orthogonal zum Körper (26) des zweiten Teils (24) mit diesem verbunden ist.

5. Hinterachsaggregat nach Anspruch 4, wobei der zweite Teil (24) zwei zueinander parallele Laschen (28) umfasst, die vom Körper (26) aus zur Feder (16) hin vorstehen.

6. Hinterachsaggregat nach einem der Ansprüche 1 bis 5, wobei die zwei Teile (22, 24) zum Beispiel durch Schweißen befestigt sind.

7. Hinterachsaggregat nach einem der Ansprüche, wobei das Organ zur Stoßabsorption (20) demontierbar ist.

8. Kraftfahrzeug, welches ein Hinterachsaggregat (10) nach einem der vorhergehenden Ansprüche umfasst.

## Claims

1. Motor vehicle rear train comprising a rear axle (12), at least one suspension spring (16) and a support cup (18) for said spring which is secured to the axle, **characterized in that** it comprises a member (20) for absorbing the energy of an impact with an external obstacle at the rear of the vehicle attached to the support cup (18) for said spring and configured to deform so as to come into contact with the spring (16) in the event of an impact with an external obstacle at the rear of the vehicle, the impact absorbing member (20) being made of a ductile material.

2. Rear train according to Claim 1, in which the impact absorbing member (20) comprises a first part (22) that is attached to the support cup (18) for the spring (16) and extending towards the rear of the vehicle, and a second part (24) that is attached to the rear end of the first part (22) and extending from said rear end towards the top of the vehicle, said second part (24) being configured to pivot in angular fashion with respect to the first part (22) about the junction between said parts (22, 24) in the event of an impact with an external obstacle at the rear of the vehicle.

3. Rear train according to Claim 2, in which the second part (24) comprises a body (26) and at least one tab (28) that projects from said body (26) towards the spring (16).

4. Rear train according to Claim 2 or 3, in which the tab is connected orthogonally to the body (26) of the second part (24).

5. Rear train according to Claim 4, in which the second part (24) comprises two tabs (28) that are mutually parallel and project from said body (26) towards the spring (16).

6. Rear train according to any one of Claims 1 to 5, in which the two parts (22, 24) are for example attached by welding.

7. Rear train according to any one of the preceding claims, in which the impact absorbing member (20) is removable.

8. Motor vehicle comprising a rear train (10) according to any one of the preceding claims.
